# DEMANDE DE BREVET EUROPEEN

(11) **EP 4 201 181 A1**
(43) Date de publication de la demande: **28.06.2023**
(21) Numéro de dépôt: 22214411.5
(22) Date de dépôt: 19.12.2022
(51) Int. Cl.: A01C 1/06, C05F 11/10, A01P 21/00

(54) **UTILISATION D'UN HYDROLYSAT DE KÉRATINE À HAUTES TENEURS EN ACIDES AMINÉS LIBRES POUR STIMULER LA LEVÉE ET LA CROISSANCE PRÉCOCE DES PLANTES**

(30) Priorité: 22.12.2021 FR 2114270
(71) Demandeur: Bretagne Chimie Fine, 56140 Pleucadeuc (FR)
(72) Inventeur: MOUNIER, Emmanuelle, 69007 Lyon (FR); DUPERRAY, Joël, 69007 Lyon (FR)
(74) Mandataire: Oak & Fox

(57) **Abrégé**

Utilisation d'un hydrolysat de kératine comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton, ledit hydrolysat comprenant de l'acide glutamique en une teneur allant de 8 à 13% en poids par rapport au poids total de l'hydrolysat et de la glycine en une teneur allant de 6 à 9% en poids par rapport au poids total de l'hydrolysat, en application sur une semence pour stimuler le développement de la plante dont elle est issue au stade précoce de sa croissance et en particulier pour améliorer la précocité foliaire, pour améliorer la biomasse racinaire, pour accélérer la levée des plants et leur implantation.

## Description

L'invention concerne le domaine de l'agriculture et plus particulièrement l'utilisation d'un hydrolysat de kératine à hautes teneurs en acides aminés libres en application sur les semences pour stimuler le développement des plantes dont elles sont issues au stade précoce de leur croissance, et augmenter leurs performances.

Différents paramètres peuvent conduire à retarder le semis c'est-à-dire la plantation ou le démarrage des cultures après le semis. Ces paramètres peuvent être externes à la semence comme par exemple la disponibilité des nutriments du sol, la température extérieure et en particulier la température du sol, il peut également s'agir de paramètres propres à la semence conduisant à un effet sur sa qualité.

Or le stade précoce est une étape capitale de la croissance. En effet les semis sont généralement effectués à la période de l'année la plus propice, par exemple avant l'été afin que les cultures profitent au maximum des mois ensoleillés. Par conséquent, un retard de développement au stade précoce risque de conduire à un développement plus lent de la plante et donc des rendements moins bons.

Diverses compositions fertilisantes, dites « starter », ont été développées pour augmenter la croissance et le rendement des plantes en stimulant le développement du système racinaire des jeunes plantes.

Ces compositions sont classiquement à base de phosphate d'ammonium, cependant ce type de compositions présente l'inconvénient d'être agressives vis à vis de la plantule.

Il existe aussi des formulations « starter » basées sur des inoculum de microorganismes à base de bactéries et/ou de champignons mycorhizes, qui visent à solubiliser le phosphore et/ou à faciliter l'accès de la plante au phosphore. Ces formulations permettent ainsi de pratiquer une agriculture plus économe en fertilisants minéraux avec un effet « starter » et des effets nutritionnels induits.

Il demeure néanmoins toujours un besoin de nouveaux produits, pour améliorer la croissance précoce des plantes, en particulier des produits qui ne conduisent pas à des déséquilibres et qui soient respectueux de l'environnement et issus de l'économie circulaire.

La demande de brevet WO2019/043128 A1 décrit un hydrolysat de kératine comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton, ledit hydrolysat comprend de la L-cystine en une teneur allant de 4 à 6% en poids, de la cystéine en une teneur inférieure ou égale à 0,1% en poids et de la tyrosine en une teneur inférieure ou égale à 0,6% ainsi qu'un procédé de préparation de cet hydrolysat.

La présente invention vise à proposer des produits destinés à être appliqués au contact des semences végétales, pour améliorer le stade précoce de développement de la plante, c'est-à-dire proposer des produits présentant un effet « starter ».

L'invention porte ainsi sur l'utilisation d'un hydrolysat de kératine comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton, ledit hydrolysat comprenant de l'acide glutamique en une teneur allant de 8 à 13% en poids par rapport au poids total de l'hydrolysat et de la glycine en une teneur allant de 6 à 9% en poids par rapport au poids total de l'hydrolysat, en application sur une semence pour stimuler le développement de la plante issue de ladite semence au stade précoce de sa croissance.

Plus particulièrement l'invention porte sur l'utilisation dudit hydrolysat de kératine pour augmenter la biomasse racinaire, pour améliorer la levée des plants, l'implantation de la culture, la croissance et la précocité foliaire et pour accélérer la levée des plants et notamment pour accélérer la vitesse de croissance jusqu'au stade 6 à 8 feuilles.

L'hydrolysat selon la présente invention, riche en acides aminés libres, utilisé en application au contact des semences permet de stimuler le développement des semences au stade précoce de leur croissance, c'est-à-dire présenter un effet « starter ». Cette utilisation permet ainsi d'augmenter les performances au stade précoce de la croissance des semences et en particulier d'augmenter la biomasse racinaire. En conséquence, elle permet d'améliorer l'enracinement et donc l'implantation de la plante, d'augmenter la vitesse de levée de la plante, notamment la vitesse de croissance jusqu'au stade 6 à 8 feuilles, ce qui permet aussi une apparition des fleurs (boutons floraux) plus précocement.

L'amélioration du développement des racines pendant les premiers jours suivant la plantation de la semence permet aux semis d'absorber plus efficacement l'eau et les nutriments afin que la plante puisse pousser et produire plus rapidement, tout en réduisant les risques de stress précoces.

Les racines sont importantes pour l'acquisition de l'eau et de nutriments, ainsi que pour l'ancrage de la plante dans le support de culture. Les racines sont également la partie de la plante où a lieu l'interaction avec les microorganismes du sol et elles constituent une importante réserve de stockage des nutriments.

Le développement de l'enracinement correspond à une augmentation de la croissance racinaire en longueur, et/ou en degré de ramifications, et/ou une augmentation de la profondeur d'enracinement, et/ou une augmentation de la longueur racinaire cumulée.

L'augmentation de la levée précoce, notamment de l'apparition précoce des premières feuilles est une condition pour un bon développement végétal ultérieur et une meilleure production.

L'utilisation de l'hydrolysat selon la présente invention s'inscrit dans la recherche d'une agriculture plus durable et résiliente : il peut être utilisé dans des quantités très inférieures aux quantités utilisées pour les engrais. En effet, sans vouloir être lié à une quelconque théorie, l'hydrolysat selon l'invention n'a pas vocation à apporter d'éléments nutritifs tels que le carbone, l'azote, le phosphore, pour les plantes mais plutôt à permettre à la jeune plante d'augmenter sa capacité d'assimilation des éléments nutritifs du sol, notamment sa capacité à s'enraciner et à développer sa biomasse (quantité) racinaire, de lui permettre d'accélérer son développement foliaire et de lever plus vite, afin d'avoir un effet durable sur sa croissance.

L'utilisation de l'hydrolysat selon la présente invention permet donc de diminuer la fertilisation des sols. L'utilisation selon l'invention produit donc indirectement des effets sur les sols puisqu'elle permet une réduction des intrants et d'engrais chimiques classiques.

D'autres aspects, avantages, propriétés de l'invention ressortiront clairement de la description, en particulier des exemples qui suivent, à titre indicatif et nullement limitatif.

### Description détaillée

### Définitions

Par « semence », on entend tout organe de reproduction notamment tout organe en dormance et particulièrement les graines, les tubercules, les bulbes.

Par « semis » on entend la mise en place de la graine sur le support de culture où sont plantées les semences et, par extension, on entend les jeunes plants issus des semences.

Par « stade précoce de la croissance », au sens du présent texte on entend généralement la période entre la plantation de la semence et le stade 6 à 8 feuilles. Généralement ce stade précoce correspond à une période allant jusqu'à 2 à 8 semaines à partir de la mise en culture de la semence. Bien entendu cette période dépend de l'espèce végétale considérée.

Les expressions « planter une semence », ou « mettre en culture une semence » sont utilisée de manière indifférenciée.

De préférence les semences utilisées selon l'invention sont choisies parmi les semences de plantes céréalières telles que le blé, le maïs, l'orge ; les semences de plantes de grandes cultures telles que les pommes de terre, betteraves ; et les semences maraîchères telles que les salades et les tomates.

### Hydrolysat

L'hydrolysat utilisé selon la présente invention se distingue par son taux élevé d'acides aminés sous forme libre : au moins 88% en poids d'acides aminés libres par rapport au poids total des acides aminés de l'hydrolysat, le reste étant également sous forme très hydrolysée puisque le reste des acides aminés de l'hydrolysat est sous la forme de petits peptides présentant une masse moléculaire inférieure ou égale à 800 Dalton. Cela est établi au moyen d'une méthode d'analyse par HPLC sur colonne chromatographique en perméation de gel qui permet de déterminer la répartition des poids moléculaires de produits contenant des protéines et/ou des peptides et/ou des acides aminés libres. L'échantillon est mis en solution : la répartition des poids moléculaires est faite sur la partie soluble des produits à analyser. Puis l'échantillon est injecté en HPLC, suivie d'une détection UV. La séparation des différents composés se fait en fonction de leur taille moléculaire.

Avantageusement, l'hydrolysat utilisé selon la présente invention est obtenu à partir de matières kératiniques naturelles, animales, notamment de volaille, avantageusement à partir de plumes de volailles. A titre de volailles, on peut citer les poules, notamment les poules pondeuses, les poulets, les dindes, les canards, les oies... Les matières kératiniques naturelles peuvent également être choisies parmi les poils d'animaux, notamment les soies de porcs, les sabots d'animaux, les ongles d'animaux.

En particulier, avantageusement l'hydrolysat selon la présente invention n'est pas obtenu à partir de kératine humaine telle que les cheveux.

Selon une première variante préférée de l'invention, l'hydrolysat présente la composition suivante en acides aminés totaux : une teneur en acide aspartique allant de 5 à 8 % en poids, de préférence allant de 6 à 7 % en poids ; une teneur en thréonine allant de 3 à 6 % en poids, de préférence de 4 à 5 % en poids ; une teneur en sérine allant de 9 à 14 % en poids, de préférence allant de 10 à 12 % en poids ; une teneur en acide glutamique allant de 9 à 11 % en poids ; une teneur en glycine allant de 6,5 à 8 % en poids ; une teneur en alanine allant de 4 à 6 % en poids, de préférence de 4 à 5 % en poids ; une teneur en valine allant de 6 à 10 % en poids, de préférence allant de 6,5 à 8 % en poids ; une teneur en méthionine allant de 0,1 à 0,6 % en poids ; une teneur en isoleucine allant de 4 à 6 % en poids, de préférence allant de 4 à 5 % en poids ; une teneur en leucine allant de 6 à 9 % en poids, de préférence allant de 7 à 8 % en poids ; une teneur en phénylalanine allant de 2 à 5 % en poids ; une teneur en lysine allant de 1 à 3 % en poids, une teneur en histidine allant de 0,4 à 1 % en poids ; une teneur en arginine allant de 5,5 à 6,5 % en poids ; une teneur en proline allant de 8,5 à 11 % en poids , une teneur en tryptophane inférieure à 0,1 %, de préférence 0 % en poids par rapport au poids total de l'hydrolysat.

Selon une deuxième variante préférée de l'invention l'hydrolysat présente une teneur en cystine allant de 1 à 2,5 % en poids, de préférence allant de 1 à 2 % en poids et une teneur en tyrosine allant de 0,1 à 1% en poids par rapport au poids total de l'hydrolysat.

Avantageusement, l'hydrolysat présente une teneur en phénylalanine allant de 2 à 5 %, de préférence de 2 à 4,5 % en poids, et une teneur en tryptophane inférieure à 0,1 %, de préférence 0 % en poids par rapport au poids total de l'hydrolysat.

La phénylalanine et le tryptophane sont les acides aminés aromatiques de l'hydrolysat, en conséquence, l'hydrolysat une teneur en acides aminés aromatiques allant de 2,1 à 5,1 %, de préférence de 2,1 à 4,6 % en poids.

Les acides aminés sont dosés selon une méthode adaptée du règlement CE 152/2009.

Selon cette méthode, pour la détermination des quantités d'acides aminés totaux, une hydrolyse au moyen d'un acide est préalablement effectuée.

Pour la détermination des quantités d'acides aminés libres et totaux, les acides aminés sont séparés par chromatographie (« CLHP » ou « HPLC » en langue anglaise) de préférence avec colonne échangeuse d'ions et dosés par réaction avec la ninhydrine et détection photométrique généralement à 570 nm.

Selon une troisième variante préférée, l'hydrolysat comprend les acides aminés libres suivants : au moins 95% d'acide aspartique sous forme libre en poids par rapport au poids total d'acide aspartique dans l'hydrolysat ; au moins 95% de thréonine sous forme libre en poids par rapport au poids total de thréonine dans l'hydrolysat ; au moins 95% de sérine sous forme libre en poids par rapport au poids total de sérine dans l'hydrolysat ; au moins 93 % d'acide glutamique sous forme libre en poids par rapport au poids total d'acide glutamique dans l'hydrolysat ; au moins 93% de glycine sous forme libre en poids par rapport au poids total de glycine dans l'hydrolysat ; au moins 93% d'alanine sous forme libre en poids par rapport au poids total d'alanine dans l'hydrolysat ; au moins 95% de méthionine sous forme libre en poids par rapport au poids total de méthionine dans l'hydrolysat ; au moins 93% de phénylalanine sous forme libre en poids par rapport au poids total de phénylalanine dans l'hydrolysat ; au moins 95%, de proline sous forme libre en poids par rapport au poids total de proline dans l'hydrolysat.

Comme présenté au tableau 2, la majorité des acides aminés sont au moins à 95% sous forme libre par rapport au poids total dudit acide aminé dans l'hydrolysat.

Les acides aminés libres sont sous leur configuration naturelle L (Lévogyre) non dénaturée, ainsi rapidement disponibles pour les microorganismes du sol. En outre, l'hydrolysat utilisé selon l'invention présente des taux élevés en acides aminés ramifiés libres : valine, leucine et isoleucine. Or, ces acides aminés ramifiés sont connus pour être plus difficiles à libérer dans des conditions de mise en oeuvre identiques.

Avantageusement, la teneur en acides aminés totaux (libres et liés) de l'hydrolysat utilisé selon l'invention, c'est-à-dire la matière active de l'hydrolysat, va de 40% à 95%, de préférence 45% à 94% en poids par rapport au poids total de l'hydrolysat, l'hydrolysat comprenant en outre de la matière minérale et de l'eau. Comme déjà mentionné les acides aminés de l'hydrolysat selon l'invention sont essentiellement des acides aminés libres.

De préférence, le taux de matière minérale dudit hydrolysat, de préférence chlorure, phosphate ou sulfate de sodium ou de potassium, est inférieur ou égal à 9 % en poids, de préférence inférieure à 8% en poids par rapport au poids total de l'hydrolysat. Ce taux de matière minérale est déterminé après calcination de l'hydrolysat à 550°C pendant 4 heures.

L'hydrolysat utilisé selon l'invention est également soluble dans l'eau, en effet 1 g d'hydrolysat est soluble dans 5 ml d'eau. En effet l'hydrolysat contient une très grande majorité d'acides aminés hydrosolubles en nombre comme en poids. De plus, le faible taux de cystine et de tyrosine dans l'hydrolysat utilisé de manière préférée contribue aussi à le rendre très hydrosoluble. Cette solubilité instantanée est un atout pour l'agriculteur utilisant l'hydrolysat sous forme liquide, car elle permet d'éviter tous les problèmes pratiques rencontrés lors de la pulvérisation, notamment le bouchage des buses du pulvérisateur... Cet avantage a notamment été observé lorsque l'hydrolysat est utilisé à des doses de 0,1 à 5 kg par hectare de surface plantée. Par ailleurs, cela lui confère aussi une très forte hygroscopicité, une propriété très intéressante pour l'application du produit final sur les semences.

Les acides aminés de l'hydrolysat peuvent être mélangés à d'autres produits de type phytopharmaceutiques et/ou engrais appliqués en solution sur le sol et les plantes ; de fait, ils permettent pour l'utilisateur final d'éviter d'ajouter des passages supplémentaires d'engins agricoles sur les champs.

### Procédé de préparation de l'hydrolysat

L'hydrolysat utilisé selon l'invention est un hydrolysat chimique, en effet il est obtenu en mettant en oeuvre au moins une étape d'hydrolyse chimique, acide. Ainsi l'hydrolysat de kératine utilisé selon l'invention est préparé à partir d'une matière kératinique animale, de préférence de volaille, selon un procédé de préparation comprenant au moins une étape d'hydrolyse acide au moyen d'un acide fort choisi parmi les acides chlorhydrique, phosphorique et sulfurique, de préférence l'acide chlorhydrique.

Avantageusement, l'hydrolysat utilisé selon l'invention est obtenu par un procédé de préparation dans lequel la matière kératinique est une matière kératinique de préférence de volaille, comprenant au moins les étapes suivantes, dans cet ordre :
- soumettre la matière kératinique à au moins une hydrolyse acide dans des conditions aptes à obtenir un hydrolysat comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton,
- éventuellement le sécher.

De préférence, la tyrosine et la cystine sont extraites dudit hydrolysat avant le séchage éventuel, de préférence cette extraction est effectuée au moyen d'une base minérale.

L'hydrolysat selon l'invention est obtenu à partir de matières kératiniques naturelles, avantageusement à partir de plumes de volailles. A titre de volailles, on peut citer les poules, poulets, dindes, canards, oies...

En particulier, l'hydrolysat selon la présente invention n'est pas obtenu à partir de kératine humaine tels que les cheveux.

Le procédé de préparation de l'hydrolysat de kératine selon l'invention met en oeuvre au moins une hydrolyse au moyen d'un acide dans des conditions aptes à obtenir un hydrolysat comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton.

Le pourcentage en petits peptides - présentant une masse moléculaire inférieure ou égale à 800 Dalton - dans l'hydrolysat va généralement de 5 à 12 % en poids par rapport au poids total de l'hydrolysat.

L'hydrolyse de la kératine est réalisée au moyen d'un acide de préférence un acide fort choisi parmi les acides chlorhydrique, phosphorique et sulfurique, de préférence l'acide chlorhydrique. De préférence l'acide fort est utilisé en une concentration allant de 10 à 30%, de préférence de 15 à 25%.

L'hydrolyse est généralement effectuée pendant une durée allant de 1 heure à 8 heures, de préférence allant de 6 à 7 heures à une température allant de 100 à 115°C, de préférence de 110 à 115°C. L'hydrolyse peut être effectuée en plusieurs étapes, par exemple 2, 3 ou 4 étapes.

Selon une variante particulière, l'hydrolyse est effectuée en deux étapes :
- une première hydrolyse réalisée à une température allant de 60 à 80°C pendant une période allant de 4 à 5 heures puis
- une deuxième hydrolyse réalisée à une température allant de 100 à 115°C pendant une période allant de 5 à 7 heures,
les deux hydrolyses pouvant être réalisées sans étape de pause intermédiaire ou en effectuant une étape de pause intermédiaire comprise entre 1 heure et 7 jours.

Plus précisément la première hydrolyse est réalisée à 72°C pendant 4,5 heures et la deuxième hydrolyse est réalisée à 107°C pendant 6 heures, une pause intermédiaire de 24 à 80 heures étant effectuée entre les deux hydrolyses.

L'hydrolyse, réalisée en une ou plusieurs étapes, est avantageusement suivie d'au moins une étape d'extraction de la cystine et de la tyrosine.

L'étape d'extraction de la cystine et de la tyrosine est réalisée au moyen d'une base, de préférence choisie parmi l'hydroxyde de sodium, l'hydroxyde de potassium, de préférence l'hydroxyde de sodium. L'ajout d'une base à l'hydrolysat permet de faire précipiter les acides aminés les moins solubles (cystine, tyrosine majoritairement), les rendant ainsi séparables de la phase liquide par des techniques adéquates, telles que la filtration ou l'essorage.

Les étapes d'hydrolyse et d'extraction de la cystine et de la tyrosine peuvent être suivies d'étapes optionnelles de purification de l'hydrolysat obtenu.

L'invention vise encore un procédé de préparation de l'hydrolysat dans lequel la tyrosine et la cystine sont extraites dudit hydrolysat et la phase liquide obtenue après l'extraction de la cystine et de la tyrosine est dessalée.

En particulier, la phase liquide obtenue après l'extraction de la cystine et de la tyrosine peut être dessalée pour en extraire les sels formés par action de la base sur l'acide, et obtenir ainsi une phase liquide dessalée.

Les étapes d'hydrolyse, d'extraction de la cystine et de la tyrosine, et de dessalement, peuvent être suivies d'étapes optionnelles de concentration et de séchage par exemple par atomisation.

Les étapes de dessalement, de concentration et de séchage sont des étapes classiques dont la mise en oeuvre relève des compétences de l'homme du métier.

L'étape d'extraction de la cystine et de la tyrosine peut être suivie d'une étape optionnelle de récupération de certains acides aminés du précipité par re-dissolution de celui-ci dans l'acide, puis re-précipitation avec une base, les acides aminés à récupérer se trouvant alors dans la phase liquide, qui peut être adjointe à la phase liquide issue du premier essorage.

De préférence, l'hydrolysat utilisé selon la présente invention comprend moins de 1 % en poids de tyrosine par rapport au poids total de l'hydrolysat, de manière préférée moins de 0,5%, de manière encore préférée, l'hydrolysat ne contient pas de tyrosine, les seules traces de tyrosine étant dues aux limites des conditions opératoires et du matériel mis en oeuvre lors de l'étape d'extraction.

De préférence, l'hydrolysat selon la présente invention comprend moins de 2,5%, de préférence moins de 1,5% et de manière préférée moins de 1% en poids de cystine par rapport au poids total de l'hydrolysat, de manière encore préférée, l'hydrolysat ne contient pas de cystine.

En outre, dans la mesure où l'hydrolysat selon l'invention n'est pas obtenu dans des conditions réductrices, il ne comprend pas de cystéine.

### Utilisations

Selon la présente invention, l'hydrolysat est utilisé avantageusement, soit en mélange avec les semences, soit en application sur les semences placées en raies de semis. En particulier, l'hydrolysat est appliqué en mélange avec les semences par enrobage, saupoudrage, pulvérisation, arrosage des semences ou en application sur les semences placées en raies de semis.

Selon la présente invention, l'hydrolysat est utilisé à une concentration allant de 4 ml/L à 50 ml/L.

Le mélange de l'hydrolysat avec les semences est effectué avant la plantation des semences, par enrobage, saupoudrage, pulvérisation ou arrosage en fonction de la forme de l'hydrolysat. Plus particulièrement l'enrobage peut être réalisé par aspersion de la semence sur tapis roulant ou encore en brassage des semences en présence de la solution dans un tambour rotatif.

Selon une première variante, l'hydrolysat est utilisé en mélange avec les semences une quantité allant de 500 g à 5000 g, de préférence de 1000 g à 2000g en matière active d'hydrolysat pour 1000 kg (1 tonne) de semences.

Généralement, le mélange est effectué dans les 24h avant la plantation de préférence juste avant la plantation.

Selon une deuxième variante, l'hydrolysat est utilisé en application sur les semences placées en raies de semis dans une quantité allant de 500 g à 5000 g, de préférence 1500 g en matière active d'hydrolysat par 10000 m² de surface plantée, plus particulièrement par 10000 m² de raies de semis.

Généralement, le traitement c'est-à-dire l'utilisation de l'hydrolysat est effectué sur les semences placées en raies de semis avant d'être enfouies.

L'hydrolysat peut également être utilisé sous forme liquide sous la forme d'une composition aqueuse comprenant de 45 à 55% et de préférence 53 % en poids d'hydrolysat de kératine sous forme solide par rapport au poids total de ladite composition. La composition aqueuse peut être le support d'autres principes actifs et en être diluée d'autant.

Selon la présente invention, l'hydrolysat peut être utilisé avec au moins un agent choisi parmi les oligoéléments, les minéraux, la lignine et ses dérivés, l'acide humique, l'acide fulvique, les extraits d'algues, la vinasse, la mélasse et les matières organiques tels que les fumiers, les coproduits d'origine animale.

Selon la présente invention, l'hydrolysat de kératine peut également être utilisé avec au moins un agent choisi parmi les produits phytopharmaceutiques, les agents de biocontrôle, les biostimulants des plantes, les produits à base de microorganismes, notamment en enrobage.

De manière particulière, l'hydrolysat peut être utilisé avec au moins un microorganisme choisi parmi les champignons et les bactéries. Les champignons sont de préférence choisis parmi les champignons endomycorhiziens ; les *Trichoderma* spp et en particulier les *Trichoderma harzianum, Trichoderma asperellum, Trichoderma atroviride* ; les *Coniothyrium minitans*; les *Glomus* mosseae et *Glomus spp.*; les *Saccharomyces cerevisiae* et les bactéries étant de préférence choisies parmi les *Bradyrhizobium japonicum*, les *Bacillus spp* en particulier les *Bacillus amyloliquefaciens* et *Bacillus mucilaginosus*; les *Pseudomonas spp* en particulier les *Pseudomonas fulva*, *Pseudomonas fluorescens* et *Pseudomonas putida.*

A titre d'exemples, on peut citer les produits présentés dans le tableau 1 suivant.

**[Tableau 1]**

| Fournisseur | Produit | Champignons | Bactéries |
|---|---|---|---|
| Actura^{®} | Resid MG^{®} | Champignons endomycorhiziens | |
| Agrifutur^{®} | Nitrogen^{®} | | *Bradyrhizobium japonicum* |
| Agrostar^{®} | Baci Start M4^{®} | | *Bacillus amyloliquefaciens* |
| BASF^{®} | Rhizoflo soja^{®} | | *Bradyrhizobium japonicum* |
| Biovitis^{®} | Cérès Carpoes Heles^{®} | *Trichoderma harzianum* | *Pseudomonas fluorescens* |
| | | | *Bacillus methylotrophicus* |
| Cybele Agro Care^{®} | Bacteriolis Rhizobacteriolis^{®} | | *Pseudomonas fulva* + *Pseudomonas fluorescens* |
| Compo expert^{®} | Agrosil turf Argin^{®} | | *Bacillus amyloliquefaciens* |
| De Sangosse^{®} | Rizoliq Top^{®} | | *Bradyrhizobium japonicum* |
| FCA^{®} | Myco'sol C^{®} | *Coniothyrium minitans Trichoderma asperellum* | *Pseudomonas fluorescens Pseudomonas putida* |
| Fertemis^{®} | Fertevie Rhiz^{®} | | *Bacillus amyloliquefaciens* |
| Elephant vert^{®} | Ovalis rhizofertil^{®} | | *Pseudomonas putida* |
| Gaiago SAS^{®} | Free PK^{®} | | *Bacillus muci*/*aginosus* |
| If Tech^{®} | Mycor^{®} | Champignon endomycorhizien | |
| Inoculum Plus^{®} | Symbivit^{®} | Champignons endomycorhiziens | |
| Hello Nature^{®} | CONDOR^{®} | Champignon endomycorhizien *Trichoderma atroviride* | Bactérie de la rhizosphère |
| Hello Nature^{®} | TEAM Horto^{®} | Champignon endomycorhizien *Trichoderma atroviride Glomus* mosseae | Bactérie de la rhizosphère |
| Hello Nature^{®} | TEAM Enrobage^{®} | Champignon endomycorhizien *Trichoderma atroviride Glomus* mosseae | Bactérie de la rhizosphère |
| Hello Nature^{®} | TIFI^{®} | *Trichoderma atroviride Glomus spp.* | Bactérie de la rhizosphère |
| Lallemant Plant Care^{®} | Rhizocell^{®} | | *Bacillus amyloliquefaciens* sp |
| Plantworks^{®} | Root grow^{®} | Champignons endomycorhiziens | |
| Premier Tech GHA^{®} | Myke Pro^{®} | Champignon endomycorhizien | |
| Koppert^{®} | Trianum-P^{®} | *Trichoderma harzianum* | |
| Agrauxine^{®} | Tri-Soil^{®} | *trichoderma atroviride* | |
| Agrauxine^{®} | Moka^{®} | *Saccharomyces cerevisiae* | |

Les exemples qui suivent visent à illustrer l'invention sans en limiter la portée.

### Exemples

### Exemple 1- Hydrolysat

### Préparation de l'hydrolysat

### Hydrolyse

Dans un réacteur/hydrolyseur de 55 000 litres, on introduit 9000 kg de plumes de volaille contenant 50% de matière sèche. Une hydrolyse chimique est réalisée en ajoutant 18 000 litres d'acide chlorhydrique (23%), l'hydrolyse est effectuée à 72°C pendant 4,5 heures.

Le produit obtenu est stocké pendant 48 heures en laissant sa température évoluer naturellement jusqu'à la température ambiante. Ensuite, une deuxième hydrolyse chimique est effectuée en chauffant à 107°C pendant 6 heures sans ajout d'acide.

L'hydrolysat obtenu comprend 88 % en poids d'acides aminés libres, le reste des acides aminés de l'hydrolysat étant sous la forme de petits peptides présentant une masse moléculaire inférieure ou égale à 800 Dalton.

### Purification

L'hydrolysat est ensuite mis à décanter afin d'éliminer la graisse apportée par la matière kératinique qui surnage en surface de la phase aqueuse. On procède à une élimination de l'acide chlorhydrique introduit en excès à l'étape d'hydrolyse. 8000 kg de concentrât sont récupérés. Puis on y ajoute 4500 kg d'eau pour obtenir 12500 kg de concentrât dilué.

### Ajustement du pH

La soude à 30,5% est ajoutée à l'hydrolysat, pour porter le pH à une valeur entre 4 et 5. Lors de l'ajout de la soude, les acides aminés les moins solubles notamment cystine, tyrosine, leucine, isoleucine précipitent au moins partiellement. Les autres acides aminés restent complètement en solution dans la phase liquide.

### Essorage

La suspension est alors placée dans une essoreuse, pour séparer le précipité (2000 kg), et récupérer la phase liquide (17000 kg) dans une cuve.

### Récupération de certains acides aminés du précipité

Le précipité (2000 kg) est redissout dans l'acide chlorhydrique à 4% environ (7000 kg), décoloré par passage sur charbon, puis la solution est neutralisée par ajout de soude à 30% (1250 kg). Un nouveau précipité se forme, qui est séparé par essorage : on obtient 650 kg de précipité et 8750 kg de phase liquide.

### Réunion des phases liquides et dessalement

Les phases liquides issues du premier essorage (17000 kg) et du second essorage (8750 kg) sont réunies et dessalées conjointement par électrodialyse pour donner environ 17500 kg de phase liquide dessalée.

### Concentration et/ou séchage

La phase liquide est concentrée par évaporation d'eau pour atteindre 55 % de matière sèche (hydrolysat sous forme liquide), elle peut être ensuite séchée par atomisation afin d'obtenir un hydrolysat sous forme de poudre contenant 98% de matière sèche.

Dans le tableau 2 sont présentées les teneurs et fractions pondérales en chacun des acides aminés dans l'hydrolysat sous forme de poudre.

**[Tableau2]**

| | **Teneur (% poids) dans la composition** | **Fraction pondérale AA libres/AA totaux** |
|---|---|---|
| Ac. Aspartique | 6,44 | 98% |
| Thréonine | 4,32 | 99% |
| Sérine | 10,72 | 100% |
| Ac. Glutamique | 9,78 | 95% |
| Glycine | 7,30 | 97% |
| Alanine | 4,38 | 97% |
| Valine | 7,30 | 70% |
| Cystine | 1,93 | 63% |
| Méthionine | 0,48 | 100% |
| Isoleucine | 4,37 | 77% |
| Leucine | 7,23 | 92% |
| Tyrosine | 0,77 | 81% |
| Phénylalanine | 4,44 | 96% |
| Lysine | 1,71 | 91% |
| Histidine | 0,60 | 93% |
| Arginine | 5,84 | 92% |
| Proline | 9,89 | 99% |
| **total** | **87,44%** | |

La teneur en acides aminés libres est de 93,1% en poids par rapport au poids des acides aminés totaux (libres et liés). Dans les exemples qui suivent, lorsque l'hydrolysat selon l'exemple 1 est utilisé sous forme de poudre, il correspond à une teneur en matière sèche de 98,0% en poids et à une teneur en azote de 12% ; lorsque l'hydrolysat selon l'exemple 1 est utilisé sous forme liquide il correspond à une teneur en matière sèche de 55% et une teneur en azote de 7,1%.

Dans les exemples qui suivent, les différences statistiques entre les valeurs ont été déterminées par la méthode ANOVA.

### Exemple 2 - Application aux semences de maïs

### Dispositif et protocole

Des semences de maïs de Variété KWS Armoris ont été placées dans des raies de semis au moyen d'un semoir -afin de garantir un semis homogène- selon une densité de 90000 semences de maïs par 10000 m², c'est-à-dire par hectare.

Puis l'hydrolysat préparé à l'exemple 1, a été appliqué en pulvérisation dans les raies de semis, directement sur les semis, en une quantité correspondant à 1,5 Kg d'hydrolysat sous forme de poudre (dans une bouillie de 200L d'eau) pour 10000 m² de surface plantée (raies de semis).

Les semences ont ensuite été enfouies, c'est-à-dire recouvertes de terre.

A titre de contrôle, des semences de maïs de la même variété, non traitées, ont été plantées à la même densité de 90000 semences de maïs par 10000 m².

Le stade de croissance des semences de maïs a été déterminé en utilisant l'échelle BBCH des céréales. Selon cette échelle, les codes 10 à 19 correspondent au développement des feuilles, en particulier les codes 17 et 18 correspondent respectivement à la présence de 7 feuilles étalées et 8 feuilles étalées.

Le tableau 3 représente le stade BBCH moyen, atteint au bout de 6 semaines, des semences traitées avec l'hydrolysat vs le témoin non traité.

**[Tableau 3]**

| Traitement | Stade BBCH moyen, atteint au bout de 6 semaines | | |
|---|---|---|---|
| | BBCH | Test statistique | % d'augmentation par rapport au témoin |
| Témoin non traité | 17 | a | - |
| Traitement avec l'hydrolysat de l'exemple 1 | 18,3 | b | +7,6% |

L'utilisation de l'hydrolysat selon l'invention permet l'obtention de plants présentant en moyenne 1 feuille de plus que le témoin c'est-à-dire 8 feuilles vs 7 feuilles pour le témoin. Ce résultat est statistiquement significatif (p<0.05).

### Exemple 3- Application aux semences de blé

Des semences de blé *Triticum aestivum* ont été enrobées avec l'hydrolysat préparé à l'exemple 1. La densité de plantation était de 230 kg pour 10000 m².

Les semences ont été enrobées avec l'hydrolysat sous forme de poudre préparé à l'exemple 1 à la dose de 1kg pour 1000 kg (1 tonne) de semences dans un volume de 1,5L d'eau ou à la dose de 1,4 kg pour 1000 kg (1 tonne) de semences dans un volume de 2L d'eau c'est-à-dire un premier exemple (3.1) réalisé selon un ratio 100g d'hydrolysat/ 100 kg de semences et un deuxième exemple (3.2) réalisé selon un ratio 140g d'hydrolysat/ 100 kg de semences.

Puis les semis ont été effectués de la manière suivante : les semences ont été mises en terre selon le protocole suivant : 230kg de semences pour 10000 m².

A titre d'exemple comparatif, la même quantité de semences non traitées ont été mise en terre selon le même protocole.

La quantité de biomasse racinaire a été mesurée au stade BBCH 12 c'est-à-dire au stade correspondant à la présence de 2 feuilles étalées. Les mesures ont été effectuées 2 mois après le semis.

La biomasse racinaire a été réalisée sur 20 plants. Le système racinaire est prélevé après l'avoir coupé au niveau du collet c'est-à-dire en prélevant uniquement la partie souterraine du plant i.e. en supprimant la partie aérienne.

Le tableau 4 représente le poids de la biomasse racinaire atteint au bout de 2 mois des plants issus de semences traitées avec l'hydrolysat vs le témoin correspondant aux plants issus de semences non traitées.

**[Tableau 4]**

| Traitement | Biomasse racinaire (en g) atteinte au bout de 2 mois | | |
|---|---|---|---|
| | Poids (en g) | Test statistique | % d'augmentation par rapport au témoin |
| Témoin non traité | 2,65 | b | - |
| Traitement 3.1 (100g d'hydrolysat en poudre pour 100 kg de semences) | 2,96 | a | +11,7% |
| Traitement 3.2 (140g d'hydrolysat en poudre pour 100 kg de semences) | 2,99 | a | +12,8% |

L'utilisation de l'hydrolysat selon l'invention a permis une augmentation significative de la biomasse racinaire au stade BBCH 12 : l'exemple 3.1 a conduit à l'obtention d'un taux de biomasse racinaire de +11,7% par rapport au contrôle et l'exemple 3.2 a conduit à l'obtention d'un taux de biomasse racinaire de +12,8% par rapport au contrôle. L'hydrolysat selon l'invention permet un bon enracinement et donc une bonne implantation.

### Exemple 4- Application aux semences de pommes de terre

Des tubercules de pommes de terre de variété Voyager ont été enrobés avec l'hydrolysat préparé à l'exemple 1.

L'enrobage (exemple 4.1) a été effectué par aspersion sur 1000 kg de tubercules d'1 kg d'hydrolysat de l'exemple 1 dissous dans 1L d'eau.

Puis les semis ont été effectués de la manière suivante : les tubercules enrobés ont été mis en terre selon un protocole respectant la densité de 35 000 tubercules pour 10000 m².

A titre de contrôle (exemple comparatif 4.2), la même quantité de tubercules non traités a été mise en terre selon le même protocole.

La quantité de pieds levés a été mesurée au bout de 39 jours. Les mesures ont été réalisées sur 20 blocs pour chacun des 2 exemples 4.1 et 4.2 respectivement. Chaque bloc est une longueur de 10 m de butte d'une largeur de 90 cm, dans lequel le nombre de pieds levés est compté.

Le tableau 5 représente le nombre de pieds levés par bloc (10 m linéaire) au bout de 39 jours

**[Tableau 5]**

| Traitement | Résultats à J39 après semis | | |
|---|---|---|---|
| | Nombre de pieds levés/bloc | Test statistique | % d'augmentation par rapport au témoin |
| Témoin non traité 4.2 | 18,3 | a | - |
| Traitement 4.1 avec l'hydrolysat de l'exemple 1 | 25,9 | b | +41,5% |

L'utilisation de l'hydrolysat selon l'invention a permis une amélioration très hautement significative de la vigueur de la levée au bout de 39 jours : l'exemple 4.1 selon l'invention a conduit à l'obtention d'un nombre de pieds levés supérieur de 41.5% à celui du groupe au contrôle (exemple comparatif 4.2). Ce résultat est très hautement significatif (THS, P<0,001).

### Conclusions

L'hydrolysat 1, conforme à l'invention, qu'il soit sous forme liquide ou solide, permet d'améliorer significativement la vigueur et la croissance précoce de plantes issues de semences traitées. L'hydrolysat selon l'invention présente un effet « starter », ce dans les premiers stades de développement de la plante : développement plus précoce des systèmes foliaire et racinaire, levée plus rapide des plants et meilleure implantation.

## Revendications

1. Utilisation d'un hydrolysat de kératine comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton, ledit hydrolysat comprenant de l'acide glutamique en une teneur allant de 8 à 13% en poids par rapport au poids total de l'hydrolysat et de la glycine en une teneur allant de 6 à 9% en poids par rapport au poids total de l'hydrolysat, en application sur une semence pour stimuler le développement de la plante issue de ladite semence au stade précoce de sa croissance.

2. Utilisation selon la revendication 1 dans laquelle l'hydrolysat présente la composition suivante en acides aminés totaux : une teneur en acide aspartique allant de 5 à 8 % en poids, de préférence allant de 6 à 7 % en poids ; une teneur en thréonine allant de 3 à 6 % en poids, de préférence de 4 à 5 % en poids ; une teneur en sérine allant de 9 à 14 % en poids, de préférence allant de 10 à 12 % en poids; une teneur en acide glutamique allant de 9 à 11 % en poids ; une teneur en glycine allant de 6,5 à 8 % en poids; une teneur en alanine allant de 4 à 6 % en poids, de préférence de 4 à 5 % en poids ; une teneur en valine allant de 6 à 10 % en poids, de préférence allant de 6,5 à 8 % en poids; une teneur en méthionine allant de 0,1 à 0,6 % en poids ; une teneur en isoleucine allant de 4 à 6 % en poids, de préférence allant de 4 à 5 % en poids ; une teneur en leucine allant de 6 à 9 % en poids, de préférence allant de 7 à 8 % en poids ; une teneur en phénylalanine allant de 2 à 5 % en poids ; une teneur en lysine allant de 1 à 3 % en poids, une teneur en histidine allant de 0,4 à 1 % en poids ; une teneur en arginine allant de 5,5 à 6,5 % en poids ; une teneur en proline allant de 8,5 à 11 % en poids , une teneur en tryptophane inférieure à 0,1 %, de préférence 0 % en poids par rapport au poids total de l'hydrolysat.

3. Utilisation selon l'une quelconque des revendications précédentes dans laquelle l'hydrolysat présente une teneur en cystine allant de 1 à 2,5 % en poids, de préférence allant de 1 à 2 % en poids et une teneur en tyrosine allant de 0,1 à 1% en poids par rapport au poids total de l'hydrolysat.

4. Utilisation selon l'une quelconque des revendications précédentes dans laquelle l'hydrolysat présente une teneur en phénylalanine allant de 2 à 5 %, de préférence de 2 à 4,5 % en poids, et une teneur en tryptophane inférieure à 0,1 %, de préférence 0 % en poids par rapport au poids total de l'hydrolysat.

5. Utilisation selon l'une quelconque des revendications précédentes dans laquelle l'hydrolysat comprend les acides aminés libres suivants : au moins 95% d'acide aspartique sous forme libre en poids par rapport au poids total d'acide aspartique dans l'hydrolysat ; au moins 95% de thréonine sous forme libre en poids par rapport au poids total de thréonine dans l'hydrolysat ; au moins 95% de sérine sous forme libre en poids par rapport au poids total de sérine dans l'hydrolysat ; au moins 93 % d'acide glutamique sous forme libre en poids par rapport au poids total d'acide glutamique dans l'hydrolysat ; au moins 93% de glycine sous forme libre en poids par rapport au poids total de glycine dans l'hydrolysat ; au moins 93% d'alanine sous forme libre en poids par rapport au poids total d'alanine dans l'hydrolysat ; au moins 95% de méthionine sous forme libre en poids par rapport au poids total de méthionine dans l'hydrolysat ; au moins 93% de phénylalanine sous forme libre en poids par rapport au poids total de phénylalanine dans l'hydrolysat ; au moins 95%, de proline sous forme libre en poids par rapport au poids total de proline dans l'hydrolysat.

6. Utilisation d'un hydrolysat de kératine selon l'une quelconque des revendications précédentes dans laquelle la semence est choisie parmi les semences de plantes céréalières telles que le blé, le maïs, l'orge ; les semences de plantes de grandes cultures telles que les pommes de terre, betteraves ; et les semences maraîchères telles que les salades et les tomates.

7. Utilisation d'un hydrolysat de kératine selon l'une quelconque des revendications précédentes dans laquelle l'hydrolysat est appliqué en mélange avec les semences par enrobage, saupoudrage, pulvérisation, arrosage des semences ou en application sur les semences placées en raies de semis, l'hydrolysat étant de préférence utilisé à une concentration allant de 4 ml/L à 50 ml/L.

8. Utilisation d'un hydrolysat de kératine selon la revendication précédente dans laquelle l'hydrolysat est utilisé en mélange avec les semences une quantité allant de 500 g à 5000 g, de préférence de 1000 g à 2000g en matière active d'hydrolysat pour 1000 kg de semences ou en application sur les semences placées en raies de semis dans une quantité allant de 500 g à 5000 g, de préférence 1500 g en matière active d'hydrolysat par 10000 m² de surface plantée, plus particulièrement par 10000 m² de raies de semis.

9. Utilisation d'un hydrolysat de kératine selon l'une quelconque des revendications précédentes **caractérisé en ce qu'**il est préparé à partir d'une matière kératinique animale, de préférence de volaille, selon un procédé de préparation comprenant au moins une étape d'hydrolyse acide au moyen d'un acide fort choisi parmi les acides chlorhydrique, phosphorique et sulfurique, de préférence l'acide chlorhydrique.

10. Utilisation d'un hydrolysat de kératine selon l'une quelconque des revendications précédentes **caractérisé en ce qu'**il est préparé à partir d'une matière kératinique animale, de préférence de volaille, selon un procédé de préparation comprenant au moins les étapes suivantes, dans cet ordre :
- soumettre la matière kératinique à au moins une hydrolyse acide dans des conditions aptes à obtenir un hydrolysat comprenant au moins 88% en poids d'acides aminés libres par rapport au poids total des acides aminés de l'hydrolysat, le reste des acides aminés de l'hydrolysat étant sous la forme de peptides présentant une masse moléculaire inférieure ou égale à 800 Dalton,
- de préférence extraire la tyrosine et la cystine dudit hydrolysat de préférence au moyen d'une base;
- éventuellement le sécher.

11. Utilisation selon la revendication précédente dans laquelle l'hydrolyse acide est effectuée pendant une durée allant de 1 heure à 8 heures, de préférence allant de 6 à 7 heures à une température allant de 100 à 115°C, de préférence allant de 110 à 115°C.

12. Utilisation selon l'une des revendications 10 ou 11 dans laquelle l'hydrolyse acide est effectuée en deux étapes :
- une première hydrolyse réalisée à une température allant de 60 à 80°C pendant une période allant de 4 à 5 heures puis
- une deuxième hydrolyse réalisée à une température allant de 100 à 115°C pendant une période allant de 5 à 7 heures,
les deux hydrolyses pouvant être réalisées sans étape de pause intermédiaire ou en effectuant une étape de pause intermédiaire comprise entre 1 heure et 7 jours.

13. Utilisation selon l'une quelconque des revendications 10 à 12 dans laquelle la tyrosine et la cystine sont extraites dudit hydrolysat et la phase liquide obtenue après l'extraction de la cystine et de la tyrosine est dessalée.

14. Utilisation d'un hydrolysat de kératine selon l'une quelconque des revendications précédentes pour augmenter la biomasse racinaire et/ou pour améliorer la levée des plants, l'implantation de la culture, la croissance et la précocité foliaire et/ou accélérer la levée des plants et notamment pour accélérer la vitesse de croissance jusqu'au stade 6 à 8 feuilles.

15. Utilisation d'un hydrolysat de kératine selon l'une quelconque des revendications 1 à 14 avec au moins un agent choisi parmi les produits phytopharmaceutiques, les agents de biocontrôle, les biostimulants des plantes, les produits à base de microorganismes, notamment en enrobage.
